# EUROPÄISCHE PATENTSCHRIFT

(11) **EP 1 979 143 B1**
(45) Veröffentlichungstag und Bekanntmachung des Hinweises auf die Patenterteilung: **21.04.2010**
(21) Anmeldenummer: 06819928.0
(22) Anmeldetag: 08.12.2006
(51) Int. Cl.: B29B 7/76

(54) **MISCHKOPF**
MIXING HEAD
TETE MELANGEUSE

(30) Priorität: 19.01.2006 DE 202006000819 U
(43) Veröffentlichungstag der Anmeldung: 15.10.2008
(73) Patentinhaber: KraussMaffei Technologies GmbH, 80997 München (DE)
(72) Erfinder: MATZEL, Jürgen, 82239 Alling (DE)
(74) Vertreter: Zollner, Richard
(86) Internationale Anmeldenummer: PCT/EP2006/069470
(87) Internationale Veröffentlichungsnummer: WO 2007/082606

(56) Entgegenhaltungen:
- EP-A1- 0 009 114
- DE-A1- 2 801 942
- US-A- 3 799 199
- US-A- 5 082 633

## Beschreibung

Die vorliegende Erfindung betrifft einen Mischkopf gemäß dem Oberbegriff des Anspruchs 1.

Allgemein sind Mischköpfe zum Einsatz für die Verarbeitung von Duroplast-Materialien, insbesondere von Polyurethan, bekannt. Bei solchen Mischköpfen werden zumindest zwei reaktive Ausgangsmaterialien in einer Mischkammer innig miteinander vermengt und das Gemisch dann aus der Mischkammer ausgetragen.

In der Mischkammer ist in bekannter Weise ein Steuerkolben angeordnet, der hin und her beweglich aufgenommen ist. Dabei sind in dem Steuerkolben Rezirkulationsnuten eingearbeitet, die dazu dienen, für das Ausgangsmaterial in einer vorgefahrenen, die Mischkammer an sich verschließenden Schaltstellung eine Rezirkulation, also einen Rückfluss der Ausgangsmaterialien zum Ausgangsbehälter, zu gewährleisten (Rezirkulationsphase). Eine solche Rezirkulation über diese Rezirkulationsnuten ist ebenfalls bekannt und bedarf keiner weiteren Erläuterung. In einer zurückgezogenen Schaltstellung des Steuerkolbens wird die Mischkammer freigegeben, die Ausgangsmaterialien können sich miteinander vermischen und werden anschließend aus der Mischkammer ausgetragen (Austragsphase).

Um eine ungewollte Vermischung der beiden Ausgangsmaterialien in der Rezirkulationsphase zu vermeiden, ist es bekannt, zwischen den Rezirkulationsnuten sogenannte Dichtnuten anzuordnen, die sich im Wesentlichen über die Länge der Rezirkulationsnuten parallel zu dieser erstrecken. Material, das aus dem Bereich der Rezirkulationsnuten in den Bereich zwischen dem Steuerkolben und der Innenwandung der Mischkammer austritt und den Mischkolben in seinem Außenumfang umwandert, sammelt sich in diesen Dichtnuten und verfestigt sich, so dass gleichsam Dichtabschnitte gebildet werden, die einen Austausch von Material zwischen den beiden Rezirkulationsbereichen sicher vermeiden.

Problematisch bei bekannten Steuerkolben ist die sehr hohe Oberflächenbelastung der nicht ausgesparten Oberflächenbereiche zwischen den Rezirkulations- und Dichtungsnuten während der Hubbewegung des Kolbens, verursacht durch den ausreagierten Schaum im Dichtungsspalt zwischen Kolben und Mischkammer. Hier ist die Gefahr einer Kaltverschweißung zwischen Steuerkolben und Mischkammer besonders hoch.

Dokument US-A-3 799 199 offenbart einen Mischkopf gemäß dem Oberbegriff des Anspruchs 1.

Aufgabe der vorliegenden Erfindung ist es, die Gefahr einer solchen Kaltverschweißung zu reduzieren.

Bei Versuchen ist festgestellt worden, dass die Gefahr eines solchen Festsetzens durch die Anordnung von taschenförmigen Ausnehmungen zwischen der Dicht- und der Rezirkulationsnut bzw. zwischen zwei Dichtnuten verringert werden kann. Die taschenförmigen Ausnehmungen sind im wesentlichen als Rücksprünge von der Mantelfläche ausgebildet, die beispielsweise durch eine Abtragung der Oberfläche des Steuerkolbens an diesen Stellen entstehen. Bei einem zylinderförmigen Steuerkolben können diese Materialabtragungen beispielsweise durch kleine Einschleifungen im Mantelbereich hergestellt werden. Dabei wird die kreisbogenförmige Umfangslinie an dieser Stelle segmentartiglinienartig abgetragen.

Gemäß einer vorteilhaften Ausbildungsform werden mehrere, insbesondere eine Vielzahl von solchen taschenförmigen Ausnehmungen im Steuerkolben angeordnet. Die Vielzahl von taschenförmigen Ausnehmungen kann dabei insgesamt eine Reihe bilden, die parallel zu den Dicht- und Rezirkulationsnuten ausgerichtet angeordnet ist. Diese parallel ausgerichtete Reihe kann sich im Wesentlichen über die Länge der Dichtnut oder über die Länge der Rezirkulationsnut erstrecken. Vorzugsweise gehen die taschenförmigen Ausnehmungen nicht ineinander über, sondern sind beabstandet voneinander angeordnet.

Die Erfindung wird nachfolgend anhand von zwei Ausführungsbeispielen und mit Bezug auf die beiliegenden Zeichnungen näher erläutert. Die beiliegenden Zeichnungen zeigen in
- Figur 1a: eine schematische Seitenansicht eines Steuerkolbens für einen erfindungsgemäßen Mischkopf,
- Figur 1b: eine schematische Draufsicht auf einen Steuerkolben nach Figur 1a,
- Figur 1c: eine perspektivische Schemadarstellung des Steuerkolbens aus Figur 1a,
- Figur 1d: einen vergrößerten Detailausschnitt entsprechend Kreis G aus Figur 1c,
- Figur 1e: eine Schnittdarstellung des Steuerkolbens aus Figur 1a,
- Figur 2a: eine schematische Draufsicht auf eine weitere Ausführungsform eines Steuerkolbens für einen erfindungsgemäßen Mischkopf,
- Figur 2b: eine schematische Seitenansicht auf einen Steuerkolben gemäß Figur 2a,
- Figur 2c: eine perspektivische Schemadarstellung des Steuerkolbens aus Figur 2a,
- Figur 2d: einen vergrößerten Detailausschnitt entsprechend Kreis H aus Figur 2c und
- Figur 2e: eine Schnittdarstellung des Steuerkolbens aus Figur 2a.

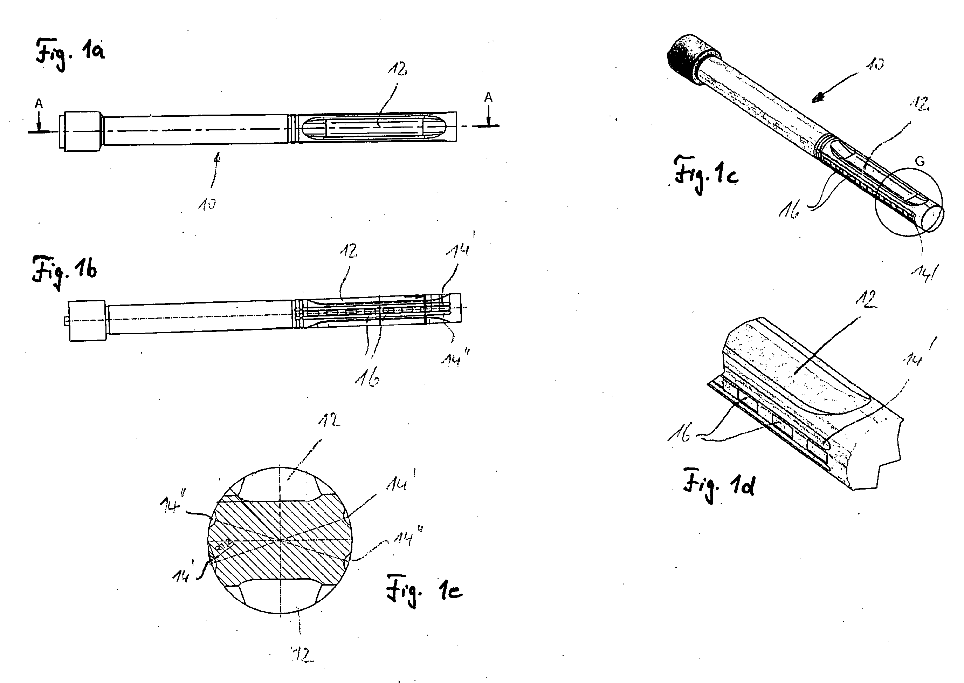

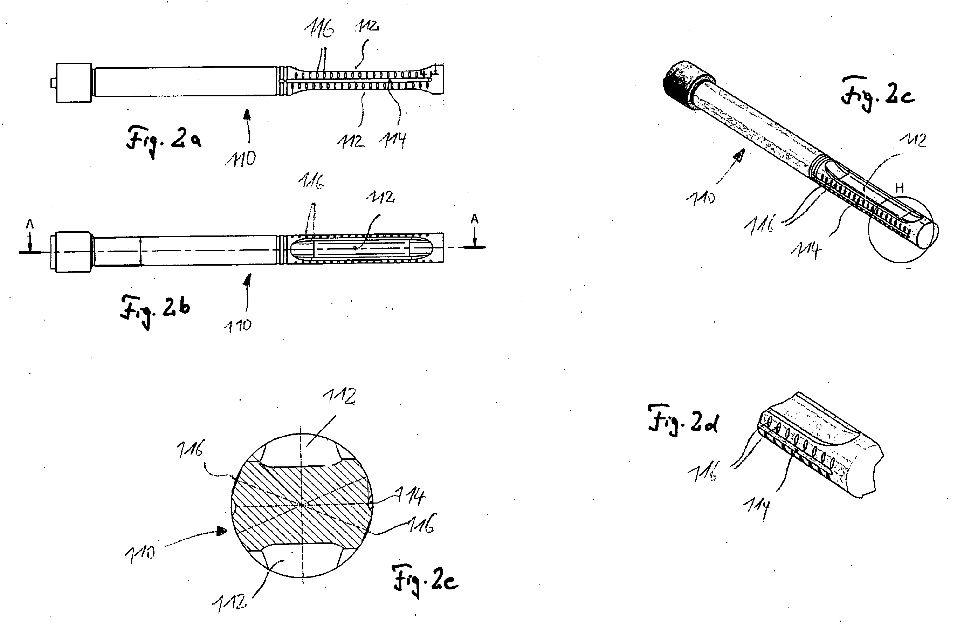

In den Figuren 1 und 2 nicht dargestellt ist der Mischkopf selbst mit einer Mischkammer, in welcher der Steuerkolben aufgenommen ist. Solche Mischköpfe sind aus dem Stand der Technik allgemein bekannt, so dass nicht explizit darauf eingegangen werden muss. In diesem Zusammenhang wird auf die EP 766 614 B1 hingewiesen, in der in den Fig. 1 und 2 mit Bezugsziffer 1 eine solche Mischkammer und mit Bezugszeichen 6 ein Mischkammerkolben (vorliegend als Steuerkolben bezeichnet) dargestellt ist

Eine erste Ausführungsform der vorliegenden Erfindung weist einen Steuerkolben 10 auf, der in den Figuren 1a) bis 1e) genauer dargestellt ist. Der Steuerkolben 10 beisitzt dabei einen Schaft, in dessen vorderem Ende zwei gegenüberliegend angeordnete und parallel zueinander ausgerichtete Rezirkulationsnuten 12 vorgesehen sind. Zwischen den beiden Rezirkulationsnuten sind auf jeder Seite zwei schmälere und weniger tiefe Dichtnuten 14' und 14" angeordnet, die sich parallel zu den Rezirkulationsnuten, parallel zueinander und im Wesentlichen über die Länge der Rezirkulationsnuten erstrecken. Zwischen den zwei umfangsmäßig beabstandeten Dichtnuten 14' und 14" sind, wie in Figur 1d besonders gut zu erkennen ist, beabstandet voneinander Ausnehmungen in der Oberfläche des Steuerkolbens 10 ausgebildet. Diese Ausnehmungen sind durch einen geringen Abtrag des Materials an dieser Stelle erzeugt, wobei dieser Abtrag beispielsweise durch Ausschleifen des Materials hergestellt werden kann. Die so entstehenden taschenförmigen Ausnehmungen 16 sind in einer Reihe und jeweils äquidistant voneinander beabstandet angeordnet.

Durch diese Ausnehmungen kann die Gefahr eines Festsetzen des Kolbens beim Hin- und Herbewegen in der Mischkammer, insbesondere bei längeren Hubausführungen, signifikant vermindert werden.

Ein Steuerkolben für eine zweite Ausführungsform der vorliegenden Erfindung ist den Figuren 2a bis 2e dargestellt. In diesen Figuren ist ein Steuerkolben 110 mit einem Schaft gezeigt, der an seinem vorderen Ende wiederum zwei gegenüberliegend angeordnete Rezirkulationsnuten 112 aufweist, wie dies auch im ersten Ausführungsbeispiel der Fall ist. Am Außenumfang des Steuerkolbens 110, jeweils mittig zwischen den beiden Rezirkulationsnuten 112 ist jeweils eine einzige Dichtnut 114 vorgesehen, die sich ebenfalls parallel und im Wesentlichen entlang der gesamten Länge der Rezirkulationsnut 112 erstreckt.

Zwischen der Dichtnut 114 und jeder Rezirkulationsnut 112 sind nunmehr eine Vielzahl von Ausnehmungen 116 angeordnet, die sich entsprechend der vorliegenden Abtragung des Materials an der Oberfläche des Steuerkolbens 110 ovalförmig ausbilden. Auch diese Ausnehmungen 116 sind im Wesentlichen äquidistant voneinander beabstandet in einer Reihe angeordnet. Dabei erstreckt sich diese Reihe in ihrer Ausdehnung im Wesentlichen ebenfalls über die Länge der Dichtnut 114 bzw. der Rezirkulationsnut 112. Die Ausnehmungen 116 zweier benachbarter Reihen sind dabei umfangsmäßig zueinander versetzt. Auch auf diese konstruktive Weise kann die Gefahr einer Festsetzung des Steuerkolbens signifikant verhindert werden.

Insgesamt ist es durch die Anordnung der Ausnehmungen in dem Steuerkolben, der in einer Mischkammer eines Mischkopfes aufgenommen ist, möglich, die Gefahr eines Festsetzens des Steuerkolbens in der Mischkammer wirksam zu senken. Die Anzahl und Anordnung der Ausnehmungen kann dabei auch von der Geometrie des Steuerkolbens und der Mischkammer sowie von den zu verarbeitenden Materialien abhängen.

### Bezugszeichenliste

- 10: Steuerkolben
- 12: Rezirkulationsnut
- 14', 14": Nuten
- 16: Oberflächenabtrag

- 110: Steuerkolben
- 112: Rezirkulationsnut
- 114: Nuten
- 116: Oberflächenabtrag

## Patentansprüche

1. Mischkopf mit einer Mischkammer, die zumindest zwei Einlässe zum Eintrag von Ausgangsmaterial aufweist sowie einen Auslass, über den das Gemisch der Ausgangsmaterialien aus der Mischkammer ausgetragen wird, wobei in der Mischkammer ein Steuerkolben (10, 110) hin- und herbeweglich angeordnet ist, in dem zumindest eine Rezirkulationsnut (12, 112) angeordnet ist, wobei
im wesentlichen parallel zu der zumindest einen Rezirkulationsnut (12, 112) zumindest eine Dichtnut (14', 14"; 114) angeordnet ist, **dadurch gekennzeichnet, dass** zwischen der Dichtnut (14', 14"; 114) und der Rezirkulationsnut (12, 112) oder zwischen zwei Dichtnuten (14', 14"; 114) zumindest eine, vorzugsweise mehrere, insbesondere eine Vielzahl von taschenförmigen Ausnehmungen (16, 116) im Steuerkolben (10, 110) vorgesehen sind.

2. Mischkopf nach einem der vorhergehenden Ansprüche,
**dadurch gekennzeichnet, dass**
über den Außenumfang des Steuerkolbens (10, 110) verteilt und parallel zueinander zumindest zwei Rezirkulationsnuten (12, 112) vorgesehen sind und zwischen zwei benachbarten Rezirkulationsnuten (12, 112) jeweils zumindest eine Dichtnut (14', 14"; 114) angeordnet ist.

3. Mischkopf nach Anspruch 1 oder 2,
**dadurch gekennzeichnet, dass**
mehrere oder eine Vielzahl von taschenförmigen Ausnehmungen (16, 116) eine Reihe bilden, die parallel zu den Dicht- (14', 14"; 114) und/oder Rezirkulationsnuten (12, 112) ausgerichtet angeordnet ist.

4. Mischkopf nach Anspruch 1 bis 3,
**dadurch gekennzeichnet, dass**
sich die Dichtnut (14', 14"; 114) zumindest über die Länge der Rezirkulationsnut (12, 112) erstreckt.

5. Mischkopf nach einem der vorhergehenden Ansprüche,
**dadurch gekennzeichnet, dass**
die taschenförmigen Ausnehmungen (16, 116) beabstandet voneinander angeordnet sind und sich im wesentlichen über die gesamte Länge der Dichtnut erstrecken.

6. Mischkopf nach Anspruch 5,
**dadurch gekennzeichnet,**
**dass** die taschenförmigen Ausnehmungen (16, 116) durch einen Materialabtrag des Steuerkolbens (10, 110) an dieser Stelle ausgebildet sind.

7. Mischkopf nach einem der vorhergehenden Ansprüche,
**dadurch gekennzeichnet, dass**
die taschenförmigen Ausnehmungen (16, 116) in zwei benachbarten Reihen jeweils umfangsmäßig versetzt zueinander sind.

## Claims

1. Mixing head with a mixing chamber, which has at least two inlets for the introduction of starting material and an outlet via which the mixture of the starting materials is discharged out of the mixing chamber, wherein a control piston (10, 110) is arranged so as to be moveable to and fro in the mixing chamber, in which control piston at least one recirculation groove (12, 112) is arranged, wherein
substantially parallel to the at least one recirculation groove (12, 112) at least one sealing groove (14', 14"; 114) is arranged,
**characterized in that**
between the sealing groove (14', 14"; 114) and the recirculation groove (12, 112) or between two sealing grooves (14', 14"; 114) at least one, preferably several, in particular a plurality of pocket-shaped recesses (16, 116) are provided in the control piston (10, 110).

2. Mixing head according to claim 1,
**characterized in that**
at least two recirculation grooves (12, 112) are provided distributed over the outer periphery of the control piston (10, 110) and parallel to each other, and between two adjacent recirculation grooves (12, 112) respectively at least one sealing groove (14', 14"; 114) is arranged.

3. Mixing head according to Claim 1 or 2,
**characterized in that**
several or a plurality of pocket-shaped recesses (16, 116) form a row which is arranged aligned parallel to the sealing (14', 14"; 114) and/or recirculation grooves (12, 112).

4. Mixing head according to Claim 1 to 3,
**characterized in that**
the sealing groove (14', 14"; 114) extends at least over the length of the recirculation groove (12, 112).

5. Mixing head according to one of the preceding claims,
**characterized in that**
the pocket-shaped recesses (16, 116) are arranged spaced apart from each other and extend substantially over the entire length of the sealing groove.

6. Mixing head according to Claim 5,
**characterized in that**
the pocket-shaped recesses (16, 116) are formed by a removal of material of the control piston (10, 110) at this location.

7. Mixing head according to one of the preceding claims,
**characterized in that**
the pocket-shaped recesses (16, 116) are respectively staggered peripherally to each other in two adjacent rows.

## Revendications

1. Tête mélangeuse avec une chambre mélangeuse qui présente au moins deux entrées pour introduire du matériau de départ ainsi qu'une sortie par laquelle le mélange des matériaux de départ sort de la chambre mélangeuse, sachant que dans la chambre mélangeuse, un piston de commande (10, 110) mobile d'avant en arrière est placé, dans lequel au moins une rainure de recirculation (12, 112) est placée,
sachant qu'une rainure d'étanchéité (14', 14", 114) au moins essentiellement parallèle à l'au moins une rainure de recirculation (12, 112) est placée,
**caractérisée en ce qu'**
entre la rainure d'étanchéité (14', 14", 114) et la rainure de recirculation (12, 112) ou entre deux rainures d'étanchéité (14', 14", 114), au moins un, de préférence plusieurs, en particulier une pluralité d'évidements (16, 116) en forme de poche sont prévus dans le piston de commande (10, 110).

2. Tête mélangeuse selon la revendication 1,
**caractérisée en ce qu'**
au-dessus du périmètre extérieur du piston de commande (10, 110), au moins deux rainures de recirculation (12, 112) sont réparties et prévues parallèlement entre elles et entre deux rainures de recirculation (12, 112), au moins une rainure d'étanchéité (14', 14", 114) respective est placée.

3. Tête mélangeuse selon la revendication 1 ou 2,
**caractérisée en ce que**
plusieurs ou une pluralité d'évidements (16, 116) en forme de poche forment une rangée qui est placée en étant alignée parallèlement aux rainures d'étanchéité (14', 14", 114) et/ou aux rainures de recirculation (12, 112).

4. Tête mélangeuse selon la revendication 1 à 3,
**caractérisée en ce que**
la rainure d'étanchéité (14', 14", 114) s'étend au moins sur la longueur de la rainure de recirculation (12, 112).

5. Tête mélangeuse selon l'une des revendications précédentes,
**caractérisée en ce que**
les évidements (16, 116) en forme de poche sont placés à distance l'un de l'autre et s'étendent essentiellement sur toute la longueur de la rainure d'étanchéité.

6. Tête mélangeuse selon la revendication 5,
**caractérisée en ce que**
les évidements (16, 116) en forme de poche sont formés par un enlèvement de matériau du piston de commande (10, 110) à cet endroit.

7. Tête mélangeuse selon l'une des revendications précédentes,
**caractérisée en ce que**
les évidements (16, 116) en forme de poche sont décalés les uns par rapport aux autres en deux rangées adjacentes sur le pourtour respectivement.
